# EUROPÄISCHE PATENTSCHRIFT

(11) **EP 0 922 925 B1**
(45) Veröffentlichungstag und Bekanntmachung des Hinweises auf die Patenterteilung: **19.03.2003**
(21) Anmeldenummer: 98123270.5
(22) Anmeldetag: 07.12.1998
(51) Int. Cl.: F41H 7/02

(54) **Militärfahrzeug zur Personenbeförderung**
Armoured vehicle for the transport of persons
Véhicule blindé pour le transport de personnes

(30) Priorität: 10.12.1997 DE 19754708
(43) Veröffentlichungstag der Anmeldung: 16.06.1999
(73) Patentinhaber: Krauss-Maffei Wegmann GmbH & Co. KG, 80997 München (DE)
(72) Erfinder: Mühlhausen, Peter, 34292 Ahnatal (DE)
(74) Vertreter: Feder, Wolf-Dietrich, Dr. Dipl.-Phys.

(56) Entgegenhaltungen:
- EP-A- 0 065 494
- DE-A- 19 526 090
- DE-A- 19 634 729
- DE-C- 3 719 289
- DE-C- 19 604 193
- GB-A- 384 641
- US-A- 2 845 990
- US-A- 3 730 583

## Beschreibung

Die Erfindung betrifft ein Militärfahrzeug zur Personenbeförderung mit den Merkmalen aus dem Patentanspruch 1.

Es sind Militärfahrzeuge zur Personenbeförderung bekannt, bei denen im Mannschaftsraum mehrere-Sitze derart angeordnet sind, daß die Personen quer zur Fahrtrichtung, d.h. quer zur Fahrzeuglängsmittelachse sitzen. Es hat sich nun herausgestellt, daß bei einer derartigen Sitzanordnung der menschliche Körper hohen Querbeschleunigungen ausgesetzt ist, die er nur in geringem Maße vertragen kann. Derartige Sitze müßten, um das Unfallrisiko zu senken, sehr nahe am Körper ausgeprägt sein, damit keine langen Wege von Körperteilen zurückgelegt werden. Außerdem müßte ein 4-5 Punkt Gurtsystem eingerichtet werden. Ein derartiges Sitzkonzept ist aber nicht nur sehr aufwendig, sondern im Hinblick auf die erforderlichen Freiräume für einen voll ausgerüsteten Soldaten (mit aufgesetztem Helm, persönlicher Ausrüstung am Koppel, Tragetaschen usw.) nicht realisierbar.

Ein Sitzkonzept, bei dem alle Sitze im Fahrzeug in Fahrtrichtung, d.h. parallel zur Fahrzeuglängsachse ausgerichtet sind, vermeidet diese Schwierigkeiten, hat aber den Nachteil, daß ein schnelles Auf- und Absitzen am Einsatzort durch die Anordnung der Sitze stark behindert ist. Siehe z.B. die im Mannschaftsraum eines Militär Fahrzeugs vorhandene Sitzanordnung, die aus DE-C-19 604 193 bekannt ist und dem Oberbegriff des Anspruchs 1 entspricht.

Es hat sich weiterhin herausgestellt, daß bei modernen Militäreinsätzen der Schwerpunkt der Anwendung des Militärfahrzeugs im Transport auch über längere Strecken liegt und nicht im taktischen Einsatz bzw. im Geländebetrieb. Dies führte zu einer stärkeren Beachtung der Sicherheitskriterien während der Transportfahrt. Außerdem möchte man zusätzlich für die Soldaten den maximal möglichen Komfort erreichen. Das betrifft vor allem einen ermüdungsfreien Transport, der unter Umständen sehr lang dauern kann. Die Soldaten sollen nach dem Transport so ausgeruht wie möglich sein, um die Einsatzfähigkeit am Einsatzort zu erhöhen. Trotzdem soll am Einsatzort ein schnelles Auf- und Absitzen möglich sein.

Der Erfindung liegt die Aufgabe zugrunde, ein Militärfahrzeug zur Personenbeförderung mit den im Oberbegriff des Patentanspruchs 1 angegebenen Merkmalen so auszubilden, daß während des Transports eine maximale Sicherheit und ein hoher Komfort gewährleistet sind, während am Einsatzort ein schnelles Auf- und Absitzen möglich sein soll. Weiterhin sollte die Sitzanordnung im Fahrzeug mit verhältnismäßig geringem Aufwand herstellbar sein.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung liegt darin, die Sitzanordnung im Fahrzeug so auszugestalten, daß während des Transports die Sitze mindestens bis zu einem gewissen Grade in Fahrtrichtung ausgerichtet sind, was in etwa einer Busanordnung entspricht, daß aber zum Auf- und Absitzen ein Verschwenken der Sitze derart möglich ist, daß ein ausreichender Durchgangsraum zum Verlassen des Fahrzeugs durch die Ausstiegstür an der Rückseite entsteht.

Es hat sich gezeigt und wird weiter unten anhand eines Ausführungsbeispiels näher erläutert, daß die vertikalen Drehachsen der Sitze so angeordnet werden können, daß bei optimaler Raumausnutzung hinsichtlich der Anzahl der Sitzplätze einerseits während des Transports ein Sitzen in einer Richtung ermöglicht wird, die sich nur durch kleine spitze Winkel von der Fahrtrichtung unterscheidet, während andererseits nach Herumschwenken der Sitze um die vertikalen Drehachsen ein ausreichend breiter Mittelgang im Fahrzeug entsteht, über den das Fahrzeug durch die Ausstiegstür am Heck verlassen werden kann.

Dabei hat sich ergeben, daß eine übliche Anordnung der Sitze in gleichabständigen Reihen, die in Längsoder Querrichtung verlaufen, hierbei nicht möglich ist, sondern durch entsprechende Anordnung der Sitze und ihrer vertikalen Drehachsen eine verschachtelte Anordnung von Sitzen notwendig ist. In dieser Anordnung sind die Sitze in der Transportposition um einen positiven oder negativen Winkel von 0-15°, vorzugsweise von ca. 10° aus der Fahrtrichtung herausgedreht, womit eine größere Beinfreiheit erreicht wird.

Bei dem erfindungsgemäßen Militärfahrzeug sind die Vorteile des Quersitzens beim Auf- und Absitzen, nämlich große Beweglichkeit wegen des breiten Mittelgangs mit den Vorteilen des Längssitzens während des Transports, nämlich ergonomische, ermüdungsfreie Sitzposition während langer Überführungsfahrten sowie sicherheitsrelevante Aspekte bei Unfallsituationen miteinander vereint.

Im folgenden wird anhand der beigefügten Zeichnungen ein Ausführungsbeispiel für das erfindungsgemäße Militärfahrzeug näher erläutert.

In den Zeichnungen zeigen:
Fig. 1 in einer schematisierten perspektivischen Darstellung ein Militärfahrzeug zur Personenbeförderung mit abgenommener Dachplatte;
Fig. 2 in einer Aufsicht bei abgenommener Dachplatte den Mannschaftsraum des Militärfahrzeugs nach Fig. 1 mit in Ein/Ausstiegsposition angeordneten Sitzen;

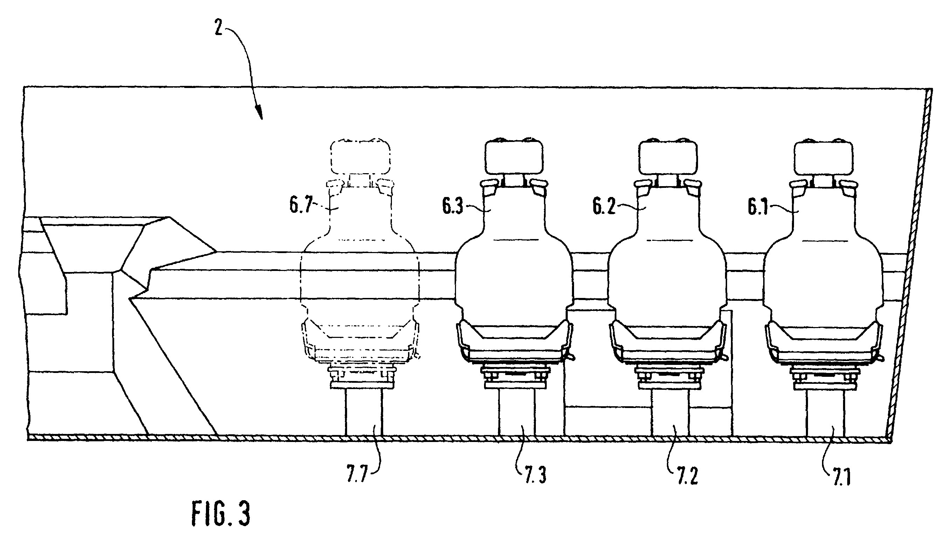

Fig. 3 einen Vertikalschnitt in der Längsmittelebene des Mannschaftsraums gemäß Fig. 2;

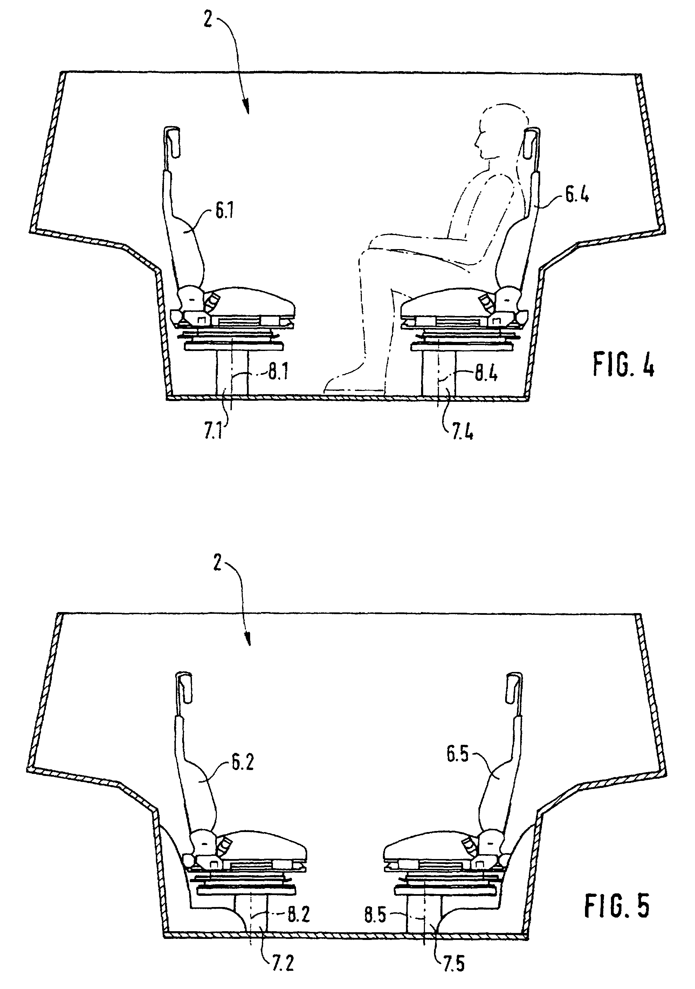

Fig. 4 einen Vertikalschnitt nach der Linie B-B in Fig. 2;
Fig. 5 einen Vertikalschnitt nach der Linie A-A in Fig. 2;
Fig. 6 in einer Darstellung analog Fig. 2 den Mannschaftsraum mit in Transportposition angeordneten Sitzen;

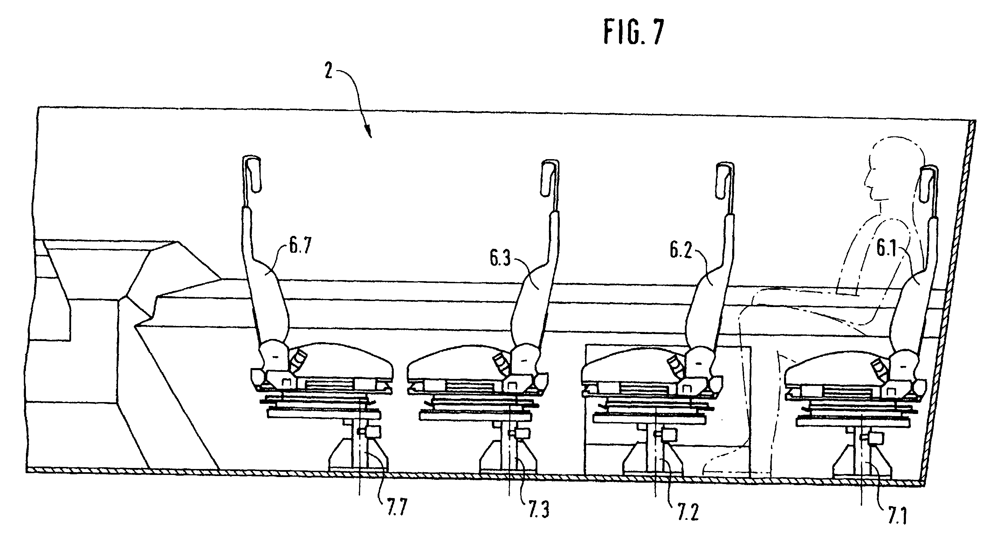

Fig. 7 einen Vertikalschnitt in der Längsmittelebene des Mannschaftsraums gemäß Fig. 6;

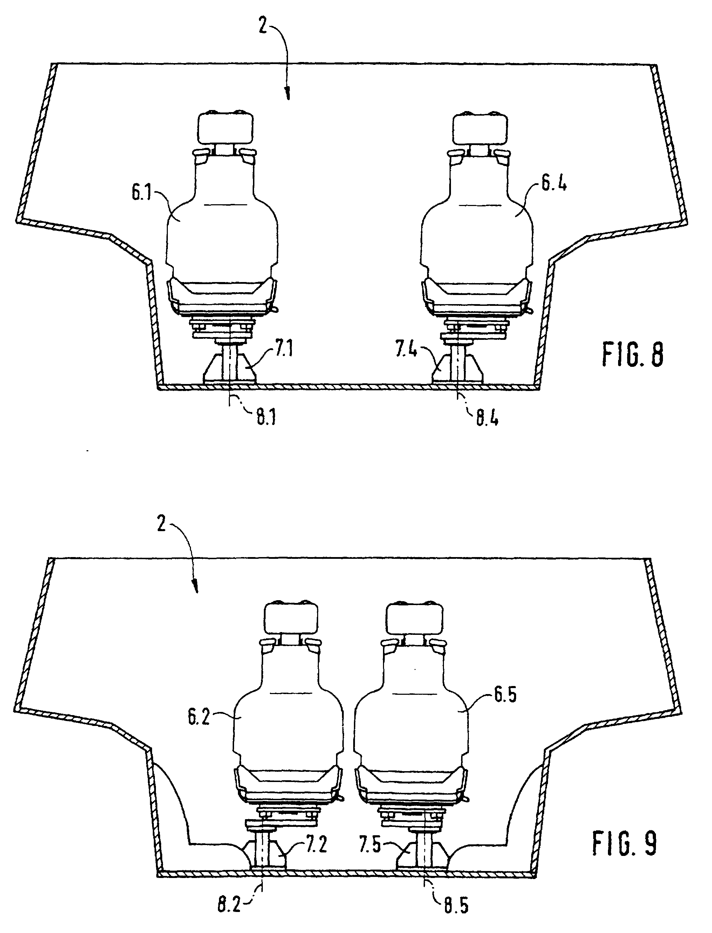

Fig. 8 einen Vertikalschnitt nach der Linie C-C in Fig. 6;
Fig. 9 einen Schnitt nach der Linie D-D in Fig. 6.

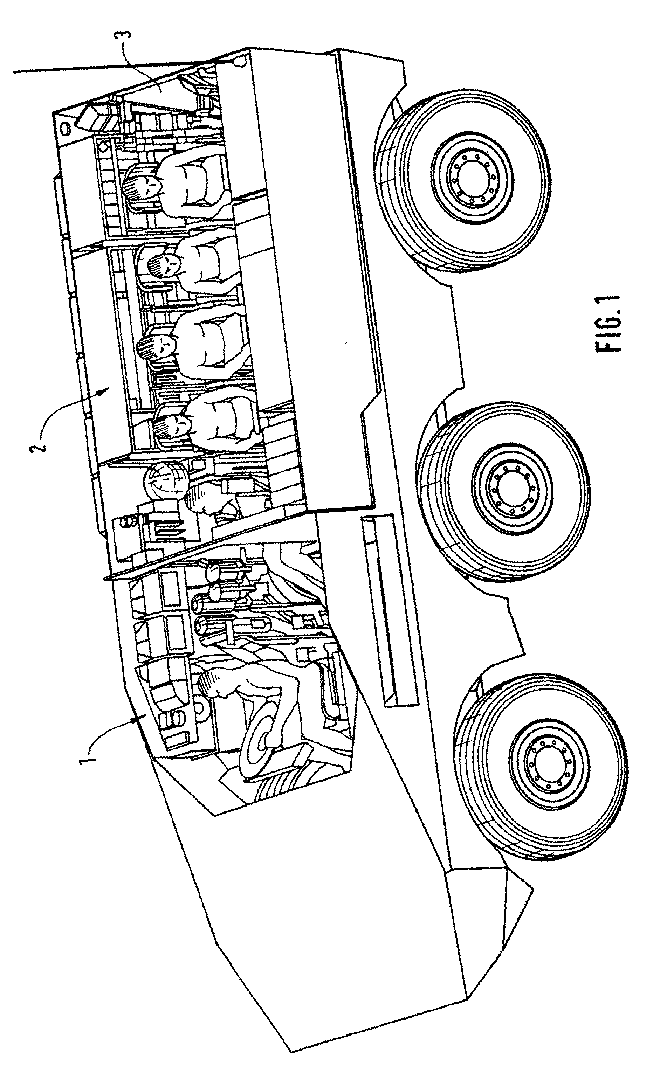

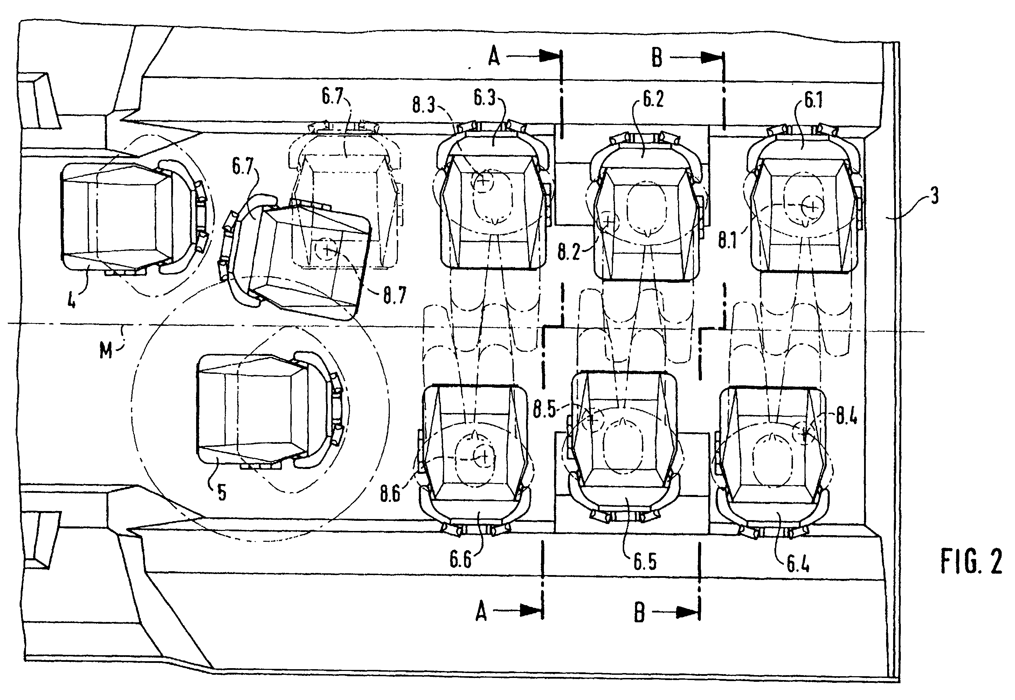

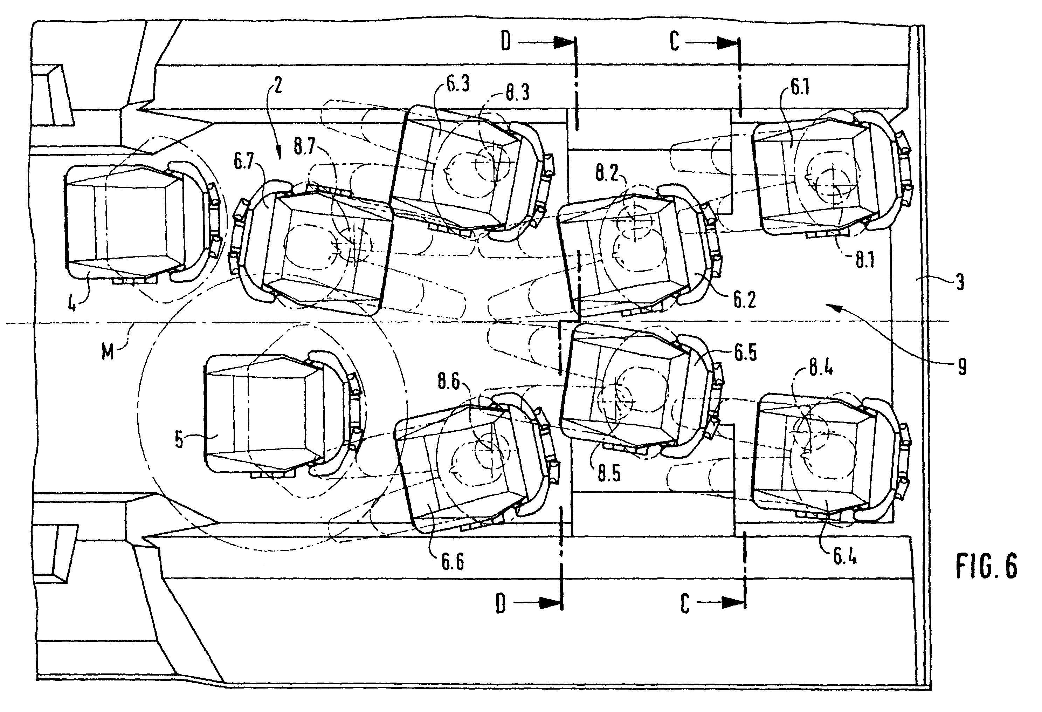

Fig. 1 zeigt ein Militärfahrzeug zur Personenbeförderung üblicher Bauart mit einem Fahrerraum 1 und einem Mannschaftsraum 2, dessen Ausstiegstür 3 an der Rückseite des Fahrzeugs angeordnet ist. Wie aus Fig. 2 und 6 zu entnehmen, ist im Übergangsbereich zwischen Mannschaftsraum 2 und Fahrerraum 1 ein besonderer Sitz 4 für den Kommandanten vorgesehen. Weiterhin ist ein Sitz 5 für den Waffenbediener vorgesehen. Darüberhinaus bietet der Mannschaftsraum 2 Platz für sieben weitere Personen, wobei im folgenden diese Besetzung mit sieben Personen und entsprechend vielen Sitzen beschrieben wird.

Die Sitze 6.1 bis 6.7 sind jeweils auf Konsolen 7.1 bis 7.7 montiert, wobei die Konsolen auf dem Fahrzeugboden befestigt sind. Alle Sitze 6.1 bis 6.7 sind auf ihrer Konsole um eine vertikale Drehachse 8.1 bis 8.7 drehbar derart, daß sie jeweils aus einer Ein/Ausstiegsposition, die in Fig. 2 dargestellt ist, und in welcher die Sitze unter Freilassung eines Mittelgangs mit ihren Längsrichtungen quer zur Fahrzeuglängsmittelachse M ausgerichtet sind, um diese vertikalen Drehachsen 8.1 bis 8.7 in eine Transportposition schwenkbar sind, die in Fig. 6 dargestellt ist, und in welcher die Längsrichtungen der Sitze mit der Fahrzeuglängsmittelachse M jeweils positive oder negative Winkel von ca. 10° einschließen. Der Sitz 6.7 ist für den Führer der Absitzgruppe gedacht und ist aus der in Fig. 2 gestrichelt dargestellten Position, in welcher er die gleiche Ausrichtung besitzt wie die Sitze 6.1 bis 6.6, in die in Fig. 2 und 6 mit ausgezogenen Linien dargestellte Position, in welcher er dem Mannschaftsraum zugewandt ist, um seine Drehachse 8.7 schwenkbar. In dieser Position bleibt für den Sitz 4 des Kommandanten ein ausreichender Raum zum Rundumschwenken erhalten.

Wie aus den Zeichnungen ersichtlich, ist weder die Anordnung der Sitze selbst, noch die Anordnung der vertikalen Drehachsen gleichabständig oder auch nur symmetrisch zur Längsmittelachse M. Vielmehr sind die vertikalen Drehachsen 8.1, 8.2 und 8.3 bzw. 8.4, 8.5 und 8.6 sowie 8.7 von in Richtung der Fahrzeuglängsmittelachse M hintereinander angeordneten Sitzen in Richtung quer zur Fahrzeuglängsmittelachse gegeneinander versetzt. Ebenso sind die vertikalen Drehachsen 8.1 und 8.4 bzw. 8.2 und 8.5 oder 8.3 und 8.6 von in Richtung quer zur Fahrzeuglängsmittelachse M nebeneinander angeordneten Sitzen in Richtung der Fahrzeuglängsmittelachse M gegeneinander versetzt. Auch liegen die vertikalen Drehachsen in allen Fällen außerhalb des Sitzmittelpunktes und besitzen in Richtung quer zur Fahrzeuglängsmittelachse M bei nebeneinander angeordneten Sitzen unterschiedliche Abstände zu dieser Fahrzeuglängsmittelachse.

Durch diese stark exzentrische Anordnung der vertikalen Drehachsen und der entsprechenden versetzten Anordnung der Sitze auf den Konsolen ist eine optimale Ausnutzung des zur Verfügung stehenden Raumes möglich. Es ergibt sich, wie Fig. 2 zeigt, in der Ein/Ausstiegsposition ein ausreichend breiter Mittelgang, über den das Fahrzeug durch die Hecktür 3 verlassen oder betreten werden kann. Dabei ist es durchaus nicht erforderlich, daß die Vorderkanten der Sitze in dieser Position fluchtend zueinander liegen. Die Vorderkanten besitzen vielmehr unterschiedliche Abstände zur Fahrzeuglängsmittelachse M. In der Transportposition gemäß Fig. 6 ist die Raumausnutzung derart, daß im Bereich der Hecktür 3 ein zusätzlicher Freiraum 9 zur Unterbringung von Gepäck oder für einen zusätzlichen Mann auf einem Notsitz entsteht.

Wie ebenfalls Fig. 6 zu entnehmen, werden die Winkel, welche die Längsrichtung der Sitze mit der Fahrzeuglängsmittelachse M, also der Fahrtrichtung einschließen, etwas unterschiedlich gewählt, so daß die Längsrichtungen der Sitze teils auf die Fahrzeuglängsmittelachse M zulaufen, teils etwas von ihr weggerichtet sind. Diese Ausrichtung kann an die konstruktiven Gegebenheiten der Gesamtanordnung angepaßt werden und können von Sitz zu Sitz unterschiedlich gewählt werden.

Die Sitze selbst sind jeweils gegenüber ihrer Konsole in der Längsrichtung verstellbar. Sie besitzen in der üblichen Weise klappbare Rückenlehnen, Kopfstützen, sowie 3-Punkt-Sicherheitsgurte.

## Patentansprüche

1. Militärfahrzeug zur Personenbeförderung mit einem im vorderen Teil des Fahrzeugs angeordneten Fahrerraum und einem im hinteren Teil des Fahrzeugs angeordneten Mannschaftsraum, dessen Ausstiegstür an der Rückseite des Fahrzeugs angeordnet ist und in dem mehrere Sitze angeordnet sind, die jeweils bewegbar auf am Fahrzeug befestigten Konsolen montiert sind, **dadurch gekennzeichnet, daß** alle Sitze (6.1 bis 6.6) des Mannschaftsraums (2) auf ihrer Konsole (7.1 bis 7.6) um eine vertikale Drehachse (8.1 bis 8.6) drehbar montiert sind derart, daß sie jeweils aus einer Ein/Ausstiegsposition, in welche die Sitze unter Freilassung eines Mittelgangs mit ihren Längsrichtungen quer zur Fahrzeuglängsmittelachse (M) ausgerichtet sind, um die vertikale Drehachse (8.1 bis 8.6) in eine Transportposition schwenkbar sind, in welche ihre Längsrichtungen mit der Fahrzeuglängsmittelachse (M) kleine spitze Winkel einschließen.

2. Militärfahrzeug nach Anspruch 1, **dadurch gekennzeichnet, daß** die vertikalen Drehachsen (8.1 bis 8.6) von in Richtung der Fahrzeuglängsmittelachse (M) hintereinander angeordneten Sitzen in Richtung quer zur Fahrzeuglängsmittelachse (M) gegeneinander um vorgegebene Beträge versetzt angeordnet sind.

3. Militärfahrzeug nach Anspruch 1 oder 2, **dadurch gekennzeichnet, daß** die vertikalen Drehachsen (8.1 bis 8.6) bei mindestens einem Teil der Sitze außerhalb des Sitzmittelpunktes liegen.

4. Militärfahrzeug nach einem der Ansprüche 1 bis 3, **dadurch gekennzeichnet, daß** die vertikalen Drehachsen (8.1 bis 8.6) von in Richtung quer zur Fahrzeuglängsmittelachse (M) nebeneinander angeordneten Sitzen in Richtung der Fahrzeuglängsmittelachse (M) gegeneinander um vorgegebene Beträge versetzt angeordnet sind.

5. Militärfahrzeug nach einem der Ansprüche 1 bis 4, **dadurch gekennzeichnet, daß** die vertikalen Drehachsen (8.1 bis 8.6) von in Richtung quer zur Fahrzeuglängsmittelachse (M) nebeneinander angeordneten Sitzen unterschiedliche Abstände zur Fahrzeuglängsmittelachse (M) besitzen.

6. Militärfahrzeug nach einem der Ansprüche 1 bis 5, **dadurch gekennzeichnet, daß** die Anordnung der vertikalen Drehachsen (8.1 bis 8.6) so ist, daß in der Ein/Ausstiegsposition die vorderen Sitzkanten von in Richtung der Fahrzeuglängsmittelachse (M) hintereinander angeordneten Sitzen unterschiedliche Abstände zur Fahrzeuglängsmittelachse (M) aufweisen.

7. Militärfahrzeug nach einem der Ansprüche 1 bis 6, **dadurch gekennzeichnet, daß** die Sitze in der Transportposition (Fig. 6) derart angeordnet sind, daß ihre Längsrichtungen mit der Fahrzeuglängsmittelachse (M) jeweils positive oder negative Winkel zwischen 0 und 15°, vorzugsweise ca. 10° einschließen.

8. Militärfahrzeug nach Anspruch 7, **dadurch gekennzeichnet, daß** die Winkel, welche die Längsrichtungen der Sitze (6.1 bis 6.6) in der Transportposition mit der Fahrzeuglängsmittelachse (M) einschließen, von Sitz zu Sitz unterschiedlich sind.

9. Militärfahrzeug nach einem der Ansprüche 1 bis 8, **dadurch gekennzeichnet, daß** die Sitze (6.1 bis 6.6) jeweils gegenüber ihrer Konsole (7.1 bis 7.6) in ihrer Längsrichtung verstellbar sind.

10. Militärfahrzeug nach einem der Ansprüche 1 bis 9, **dadurch gekennzeichnet, daß** im Übergangsbereich zwischen Mannschaftsraum 2 und Fahrerraum 1 ein Sitz für eine Führungsperson angeordnet ist, der um eine vertikale Drehachse aus einer quer zur Fahrtrichtung weisenden Position in eine dem Mannschaftsraum (2) zugewandte Position schwenkbar ist.

## Claims

1. Military vehicle for transporting personnel with a driver space arranged in the front part of the vehicle and a troop space arranged in the back part of the vehicle, the exit door of which troop space is arranged at the back of the vehicle and in which a plurality of seats are arranged which are each movably mounted on consoles fastened to the vehicle, **characterised in that** all seats (6.1 to 6.6) of the troop space (2) are rotatably mounted on their consoles (7.1 to 7.6) about a vertical axis of rotation (8.1 to 8.6) in such a way that they can each be swivelled about the vertical axis of rotation (8.1 to 8.6) from an entry/exit position, in which the seats are oriented transversely to the longitudinal centre line (M) of the vehicle with their longitudinal directions while leaving a centre aisle free, into a transportation position in which their longitudinal directions enclose small acute angles with the longitudinal centre line (M) of the vehicle.

2. Military vehicle according to claim 1, **characterised in that** the vertical axes of rotation (8.1 to 8.6) of seats arranged in succession in the direction of the longitudinal centre line (M) of the vehicle are arranged mutually offset by predetermined amounts in the direction transverse to the longitudinal centre line (M) of the vehicle.

3. Military vehicle according to claim 1 or 2, **characterised in that** the vertical axes of rotation (8.1 to 8.6) are located outside of the centre of the seat in at least some of the seats.

4. Military vehicle according to any of claims 1 to 3, **characterised in that** the vertical axes of rotation (8.1 to 8.6) of seats arranged side by side in the direction transverse to the longitudinal centre line (M) of the vehicle are arranged mutually offset by predetermined amounts in the direction of the longitudinal centre line (M) of the vehicle.

5. Military vehicle according to any of claims 1 to 4, **characterised in that** the vertical axes of rotation (8.1 to 8.6) of seats arranged side by side in the direction transverse to the longitudinal centre line (M) of the vehicle are at different distances from the longitudinal centre line (M) of the vehicle.

6. Military vehicle according to any of claims 1 to 5, **characterised in that** the arrangement of the vertical axes of rotation (8.1 to 8.6) is such that, in the entry/exit position, the front seat edges of seats arranged in succession in the direction of the longitudinal centre line (M) of the vehicle have different spacings from the longitudinal centre line (M) of the vehicle.

7. Military vehicle according to any of claims 1 to 6, **characterised in that** the seats are arranged in the transportation position (Fig. 6) in such a way that their longitudinal directions each enclose positive or negative angles between 0 and 15°, preferably of about 10°, with the longitudinal centre line (M) of the vehicle.

8. Military vehicle according to claim 7, **characterised in that** the angles which the longitudinal directions of the seats (6.1 to 6.6) enclose with the longitudinal centre line (M) of the vehicle in the transportation position are different from seat to seat.

9. Military vehicle according to any of claims 1 to 8, **characterised in that** the seats (6.1 to 6.6) are each adjustable in their longitudinal direction with respect to their consoles (7.1 to 7.6).

10. Military vehicle according to any of claims 1 to 9, **characterised in that** a seat for a Commander is arranged in the transition region between troop space (2) and driver space (1), which seat can be swivelled about a vertical axis of rotation from a position pointing transversely to the direction of travel into a position facing the troop space (2).

## Revendications

1. Véhicule militaire pour le transport de personnes comportant un espace conducteur aménagé dans la partie avant du véhicule et un espace équipage aménagé dans la partie arrière du véhicule, dont la porte de sortie est aménagée dans le fond du véhicule et dans lequel sont disposés plusieurs sièges, qui sont montés chaque fois de façon mobile sur des consoles fixées sur le véhicule, **caractérisé en ce que** tous les sièges (6.1 à 6.6) de l'espace équipage (2) sont montés sur leur console (7.1 à 7.6) autour d'un axe vertical (8.1 à 8.6) tournant, de telle sorte qu'à partir d'une position entrée/sortie dans laquelle les sièges, en laissant libre un couloir central, soient chaque fois disposés dans leur sens longitudinal transversalement par rapport à l'axe central longitudinal du véhicule, soient oscillants autour de l'axe vertical tournant (8.1 à 8.6) dans une position de transport, dans laquelle, par rapport à l'axe central longitudinal du véhicule (M), leurs sens longitudinaux comprennent de petits angles aigus.

2. Véhicule militaire selon la revendication 1, **caractérisé en ce que** les axes verticaux tournants (8.1 à 8.6) de sièges, disposés les uns derrière les autres en direction de l'axe central longitudinal du véhicule (M), sont disposés les uns contre les autres, de manière décalée, en direction transversale par rapport à l'axe central longitudinal du véhicule (M), selon des distances fixés à l'avance.

3. Véhicule militaire selon la revendication 1 ou 2, **caractérisé en ce que**, pour au moins une partie des sièges, les axes verticaux tournants (8.1 à 8.6) se trouvent en-dehors du centre des sièges.

4. Véhicule militaire selon l'une des revendications 1 à 3, **caractérisé en ce que** les axes verticaux tournants (8.1 à 8.6) de sièges, disposés les uns à côté des autres transversalement par rapport à l'axe central longitudinal du véhicule (M), sont disposés les uns contre les autres, de manière décalée, transversalement par rapport à l'axe central longitudinal du véhicule (M), selon des distances fixées à l'avance.

5. Véhicule militaire selon l'une des revendications 1 à 4, **caractérisé en ce que** les axes verticaux tournants (8.1 à 8.6) de sièges disposés les uns à côté des autres transversalement par rapport l'axe central longitudinal du véhicule (M) possèdent des espacements différents par rapport à l'axe central longitudinal du véhicule (M).

6. Véhicule militaire selon l'une des revendications 1 à 5, **caractérisé en ce que** l'agencement des axes verticaux tournants (8.1 à 8.6) est tel, que dans la position entrée/sortie, les bords antérieurs des sièges disposés les uns derrière les autres dans la direction de l'axe central longitudinal du véhicule (M) présentent des espacements différents par rapport à l'axe central longitudinal du véhicule (M).

7. Véhicule militaire selon l'une des revendications 1 à 6, **caractérisé en ce que** les sièges en position de transport (Fig. 6) sont disposés de telle manière que leurs sens longitudinaux comprennent chaque fois des angles positifs ou négatifs situés entre 0 et 15°, de préférence à environ 10°.

8. Véhicule militaire selon la revendication 7, **caractérisé en ce que** les angles qui incluent les directions longitudinales des sièges (6.1 à 6.6) en position de transport avec l'axe central longitudinal du véhicule (M), sont différents de siège à siège.

9. Véhicule militaire selon l'une des revendications 1 à 8, **caractérisé en ce que** les sièges (6.1 à 6.6) sont réglables dans leur sens longitudinal chaque fois par rapport à leur console (7.1 à 7.6).

10. Véhicule militaire selon l'une des revendications 1 à 9, **caractérisé en ce que** dans la zone de transition entre l'espace équipage (2) et l'espace conducteur (1) un siège est disposé pour un guide, siège qui est oscillant autour d'un axe vertical à partir d'une position transversale par rapport au sens de la marche en direction d'une position orientée vers l'espace équipage (2).
